# EUROPEAN PATENT APPLICATION

(11) **EP 2 621 161 A2**
(43) Date of publication of application: **31.07.2013**
(21) Application number: 12005903.5
(22) Date of filing: 16.08.2012
(51) Int. Cl.: H04N 5/232

(54) **Method and system for an adaptive auto-focus algorithm**

(30) Priority: 30.01.2012 US 201213361579
(71) Applicant: Broadcom Corporation, Irvine, CA 92617 (US)
(72) Inventor: Blayvas, Ilja, Irvine California 92617 (US)
(74) Representative: Jehle, Volker Armin

(57) **Abstract**

A method and system for auto-focusing is presented that receives an image at an image capture device, determines a focus measure of the image, and adjusts a focus of the image by moving a lens in the image capture device in a first direction until a maximum focus measure position is reached. The method and system then evaluates a noise level of the focus measure and continues to adjust the focus of the image by further moving the lens in the first direction until the focus measure is decreased by an adaptive threshold amount, wherein the adaptive threshold amount is based on the noise level of the focus measure. The method and system then adjusts the focus of the image by moving the lens in a second direction to the maximum focus measure position.

## Description

### FIELD OF INVENTION

The invention relates to image processing, and more specifically to automatic focusing of an image based on a noise level of the focus measure.

### BACKGROUND

### Related Art

Many current digital cameras feature automatic focusing that consists of an optical system with one or more sensors and a control system that positions a lens along an optical axis to automatically detect the best focus. The sensor evaluates the focus measure, typically the sum of the gradients in the image, and stops the lens at the position of the maximum focus measure, which is the position of sharpest focus.

In order to ascertain that the actual sharpest focus position has been found, many digital cameras employ an auto-focus algorithm that includes a process of overshooting the sharpest focus point by continuing to move the lens past the suspect sharpest focus point to create some blurring of the image. If the blurring occurs then the camera assumes that the sharpest focus position has indeed been found and returns the lens to the position where the focus measure was maximized.

The time a camera takes to reach the sharpest focus point is critical to being able to capture the desired image. In an attempt to minimize the time to reach the position of sharpest focus, an auto-focus algorithm may limit the amount of overshoot while attempting to validate the sharpest focus point. However, doing so may result in an unreliable validation and may result in missing the sharp focus position. A more cautious auto-focus algorithm may increase the overshoot significantly to ensure validation of the position of sharpest focus but may result in unpleasant blurring being shown to the operator of the camera.

The ideal selection of overshoot in an auto-focus algorithm actually depends on the particular scene being focused, including movement of the subject matter, illumination levels of the scene, and the contrast levels within the image. In a highly illuminated image with high contrast, only a small level of overshoot is needed to validate the position of sharpest focus. In low light conditions the image and focus measure become obscured with noise in the image thereby prompting a much longer overshoot.

Typical auto-focus algorithms incorporate a pre-defined blurring-overshoot threshold that is designed for a "normal" set of conditions, but is not the most efficient in high illumination / low noise environments and may not be useable in low illumination /high noise environments. Such deficiencies result in less than optimum auto-focusing in both high and low focus measure situations and possibly no ability to auto-focus in low light conditions.

Therefore, what is needed is an adaptive auto-focus algorithm that is capable of determining an overshoot threshold based on the noise level of a focus measure. Further, the adaptive threshold is designed to be a multiple of a current noise level of the focus measure.

### BRIEF SUMMARY OF THE INVENTION

According to an aspect, a system for auto-focusing comprises:
an image capture device configured to receive an image;
a controller configured to determine a focus measure of the image and a noise level of the focus measure; and
a focus system configured to:
   determine an adaptive threshold based on the noise level; and
   adjust a focus of the image by moving a lens in the image capture device until a maximum focus measure position is reached, using the adaptive threshold level.

Advantageously, the controller continuously determines the focus measure and the noise level of the focus measure.

Advantageously, the focus system determines the adaptive threshold for the focus measure as a multiple of the noise level of the focus measure.

Advantageously, the focus system verifies the maximum focus measure position by overshooting the maximum focus measure position by an adaptive threshold amount and then returning to the maximum focus measure position.

Advantageously, the controller determines the focus measure based on intensity.

Advantageously, the controller determines focus measure based on a summing of gradients of the image.

According to an aspect, a system for auto-focusing comprises:
an image capture device configured to receive an image;
a controller configured to determine a focus measure of the image and a noise level of the focus measure; and
a focus system configured to:
   determine an adaptive threshold for the focus measure based on the noise level of the focus measure;
   adjust a focus of the image by moving a lens in the image capture device in a first direction until the focus measure value decreases by a value equal to the adaptive threshold; and
   move the lens in the image capture device in a second direction.

Advantageously, the focus system moves the lens in the second direction until the focus measure reaches a maximum value and then decreases from the maximum value by the value equal to the adaptive threshold.

Advantageously, the focus system moves the lens in the second direction until a maximum focus measure position is reached.

According to an aspect, a method for auto-focusing comprises:
receiving an image at an image capture device;
determining a focus measure of the image;
adjusting a focus of the image by moving a lens in the image capture device in a first direction;
evaluating a noise level of the focus measure;
continuing to adjust the focus of the image by further moving the lens in the first direction until the focus measure is decreased by an adaptive threshold amount; and
adjusting the focus of the image by moving the lens in a second direction to a maximum focus measure position,
wherein the adaptive threshold amount is based on the noise level of the focus measure.

Advantageously, the evaluating a noise level of the focus measure is performed continuously.

Advantageously, the evaluating a noise level of the focus measure is performed on a periodic basis.

Advantageously, the adaptive threshold amount is continuously estimated.

Advantageously, the adaptive threshold amount is a multiple of the noise level of the focus measure.

Advantageously, an adaptive threshold is increased as a result of a decreasing illumination level of the image.

Advantageously, the determining of the focus measure is based on a light intensity.

Advantageously, the determining of the focus measure comprises summing gradients of the image.

Advantageously, the method further comprises, prior to adjusting the focus of the image by moving the lens in the image capture device in the first direction until a maximum focus measure position is reached, moving the lens in the second direction, wherein the focus measure decreases.

Advantageously, the method further comprises:
upon determining that the focus measure is decreasing, adjusting the focus of the image by moving the lens in the first direction.

Advantageously, the determination that the focus measure is decreasing comprises moving the lens in the second direction until the focus measure is decreased by the adaptive threshold amount.

### BRIEF DESCRIPTION OF THE DRAWINGS/FIGURES

Exemplary embodiments are described with reference to the accompanying drawings. In the drawings, like reference numbers indicate identical or functionally similar elements. Additionally, the left most digit(s) of a reference number identifies the drawing in which the reference number first appears.

FIG. 1 is an example that illustrates an auto-focus system for an image capture device;

FIG. 2 is an example of a diagram illustrating a lens position given a focus measure in an auto-focus system that excludes the noise level component of a focus measure;

FIG. 3 illustrates a diagram illustrating a lens position given a focus measure in an auto-focus system showing the noisy sample of focus measure estimates;

FIG. 4 illustrates a detail diagram illustrating a lens position given a focus measure in an auto-focus system showing the noisy sample of focus measure estimates, according to an embodiment of the present disclosure;

FIG. 5 illustrates a diagram illustrating a lens position given a focus measure in an auto-focus system with low noise, according to an embodiment of the present disclosure;

FIG. 6 illustrates a diagram illustrating a lens position given a focus measure in an auto-focus system with high noise, according to an embodiment of the present disclosure;

FIGs. 7 and 8 illustrates block diagrams of exemplary methods for adaptive auto-focus algorithms based on the noise level of a focus measure, according to embodiments of the present disclosure; and

FIG. 9 is a diagram of an example implementation of an auto-focus system according to an embodiment of the present disclosure.

Embodiments will now be described with reference to the accompanying drawings.

### DETAILED DESCRIPTION

The following Detailed Description refers to accompanying drawings to illustrate exemplary embodiments. References in the Detailed Description to "one exemplary embodiment," "an exemplary embodiment," etc., indicate that the exemplary embodiment described may include a particular feature, structure, or characteristic, but every exemplary embodiment may not necessarily include the particular feature, structure, or characteristic. Moreover, such phrases are not necessarily referring to the same exemplary embodiment. Further, when a particular feature, structure, or characteristic is described in connection with an exemplary embodiment, it is within the knowledge of those skilled in the relevant art(s) to affect such feature, structure, or characteristic in connection with other exemplary embodiments whether or not explicitly described.

The exemplary embodiments described herein are provided for illustrative purposes, and are not limiting. Other embodiments are possible, and modifications may be made to the exemplary embodiments within the spirit and scope of the present disclosure. Therefore, the Detailed Description is not meant to be limiting. Rather, the scope of the present disclosure is defined only in accordance with the following claims and their equivalents.

Embodiments may be implemented in hardware (*e.g.*, digital cameras and/or circuits), firmware, software, or any combination thereof. Embodiments may also be implemented as instructions stored on a machine-readable medium, which may be read and executed by one or more processors. A machine-readable medium may include any mechanism for storing information in a form readable by a machine (*e.g.*, a computing device). For example, a machine-readable medium may include read only memory (ROM); random access memory (RAM); magnetic disk storage media; optical storage media; flash memory devices;. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

For purposes of this discussion, the term "module" shall be understood to include at least one of software, firmware, and hardware (such as one or more circuit, microchip, or device, or any combination thereof), and any combination thereof. In addition, it will be understood that each module may include one, or more than one, component within an actual device, and each component that forms a part of the described module may function either cooperatively or independently of any other component forming a part of the module. Conversely, multiple modules described herein may represent a single component within an actual device. Further, components within a module may be in a single device or distributed among multiple devices in a wired or wireless manner.

The following Detailed Description of the exemplary embodiments will so fully reveal their general nature that others can, by applying knowledge of those skilled in relevant art(s), readily modify and/or adapt for various applications such exemplary embodiments, without undue experimentation, without departing from the spirit and scope of the present disclosure. Therefore, such adaptations and modifications are intended to be within the meaning and plurality of equivalents of the exemplary embodiments based upon the teaching and guidance presented herein. It is to be understood that the phraseology or terminology herein is for the purpose of description and not of limitation, such that the terminology or phraseology of the present specification is to be interpreted by those skilled in relevant art(s) in light of the teachings herein.

Although the description of the embodiments is to be described in terms of image capture devices (specifically digital cameras), those skilled in the relevant art(s) will recognize that the embodiments may be applicable to other imaging devices without departing from the spirit and scope of the present disclosure.

### Digital Imaging

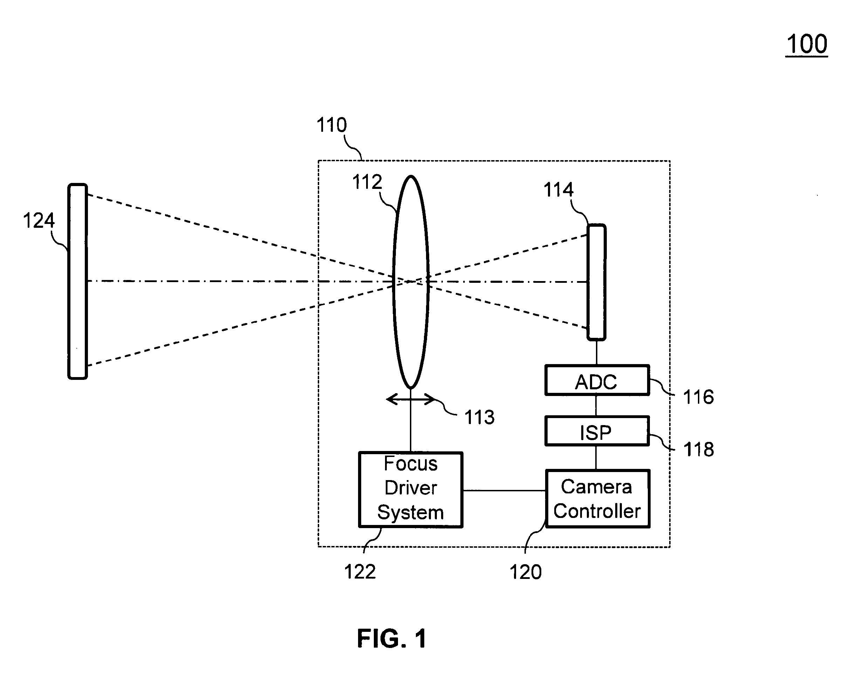

FIG. 1 illustrates a block diagram of an auto-focus (AF) system 100, according to an embodiment of the present disclosure. AF system 100 includes image capture device 110 capable of receiving and capturing an image of subject 120. Image capture device 110 includes a moveable lens 112, an image sensor 114, an analog to digital converter (ADC) 116, a digital image signal processor (ISP) 118, a camera controller 120, and a focus driver system 122.

Lens 112 is moved in any direction by focus driver system 122, but is shown to move in the plane indicated by the direction of movement 113. Camera controller 120 analyzes the output of image sensor 114 to determine if lens 112 should be moved by focus driver system 122 in order to bring the image of subject 120 (herein after referred to as image 120) into focus on image sensor 114. ADC 116 converts the analog image data of image 120 into digital image data.

Camera controller 120 determines if image 120 is in focus by measuring a focus measure that is evaluated by processing image 120 in ISP 118. Focus measure is a mathematical value obtained from the processing of pixel values of image 120 on image sensor 114. There are numerous algorithms available to process image 120 including a simple focus measure that is the sum of gradients over the image, such as the sum of absolute differences between neighboring pixels. In such an algorithm, if the image is blurred, the neighboring pixels will have very similar values, and hence the focus measure will be relatively low. If the image is sharp the difference between neighboring pixels will be relatively high, and hence the focus measure will be relatively high. The sharpest images correspond to the largest sum of differences of neighboring pixels and represent the point at which image 120 is focused.

In a more sophisticated AF algorithm, additional processing can be utilized to perform additional image analysis. For example, only pixels from a particular region of the image are analyzed, *e.g*., at the center of the image, or filters such as for pixel brightness, color, and spatial frequencies can be applied.

Camera controller 120, in analyzing image 120 at image sensor 114, is also confronted with other information contained within image 120 such as noise. Image noise is a common problem in digital photography. Image noise can be equated to the grain of film in analog film based photography. Image noise is typically random variations of illumination or color in a captured image that adds spurious and extraneous information.

Image noise becomes more perceptible under low light conditions. In low light, the correct exposure of an image requires the use of longer shutter speeds, higher ISO settings, (*e.g*., gain or exposure index), or a combination of both. In a digital camera the longer shutter speeds and/or higher ISO settings result in a relative increase in noise within image 120. In order to quickly and efficiently reach the focus point, ISP 118 incorporates analysis of the level of noise in image 120 and the subsequent control of focus driver system 122 and lens 112 as will be discussed later.

### Overshoot During Auto-Focus

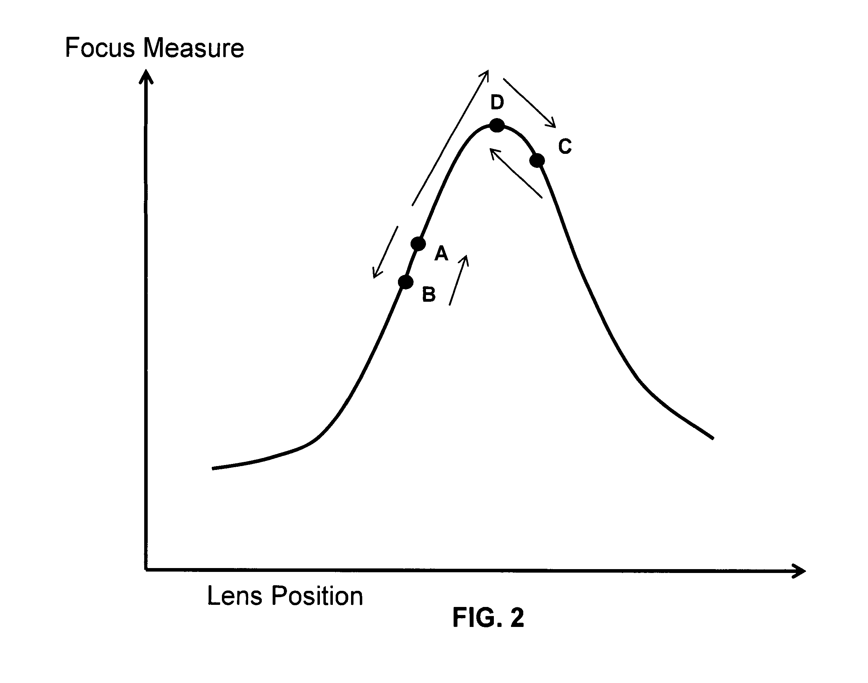

FIG. 2 is an example of a diagram illustrating a basic cycle of an AF algorithm showing a lens position given a focus measure, according to an embodiment of the present disclosure. The diagram in Fig. 2 does not illustrate any image noise or the associated effects on focus measure as will be discussed later.

As previously mentioned, in order to ascertain that the actual sharpest focus position has been found, digital cameras typically employ an auto-focus algorithm that includes a process of overshooting the sharpest focus point by continuing to move the lens past the suspect sharpest focus point to create some blurring of the image. When the blurring occurs the camera assumes that the sharpest focus position has been found and passed, and returns the lens to the position where the focus measure is maximized.

FIG. 2 shows a plot of focus measure as a function of lens position. The position where the focus measure is maximized, at point D, indicates the position of sharpest focus. Point A indicates a possible starting position of lens 112. Focus driver system 122 arbitrarily chooses the direction 113 in which to start moving lens 112. In the scenario where the choice is in the "correct" direction, lens 112 starts moving from point A towards point D. However, in order to ascertain if point D is the maximum focus measure, camera controller 120 instructs focus driver system 122 to continue moving lens 112 in the same direction until camera controller 120 determines that the focus measure of image 120 on image sensor 114 is decreasing. Once camera controller 120 makes such a determination it instructs focus driver system 122 to move lens 112 in the opposite direction, back to point D.

When focus driver system 122 incorrectly chooses the starting direction 113 in which to move lens 112, lens 112 starts moving from point A towards point B. Camera controller 120 senses that the focus is decreasing and then reverses the direction of movement 113 of lens 122 such that lens 112 moves towards point D. As in the previous example, in order to ascertain if point D is the maximum focus measure, camera controller 120 instructs focus driver system 122 to continue moving in the same direction until camera controller 120 determines that the focus measure of image 120 on image sensor 114 is decreasing. Once camera controller 120 makes such a determination it instructs focus driver system 122 to move lens 112 in the opposite direction, back to point D.

The movement of lens 112 from points A to B and from points D to C can be considered to be counterproductive to the process of reaching to sharpest focus point. As such, if there was no noise in image 120 then the movement of lens 112 in the incorrect initial direction from A to B, and in the case of the overshoot verification from point D to C, could be minimized to the point that there would be essentially no inefficiency due to lens movement. However, as digital images inherently include noise, especially in low light and high ISO settings, overshoot verification is a necessity.

### Noise Effects During Auto-Focus

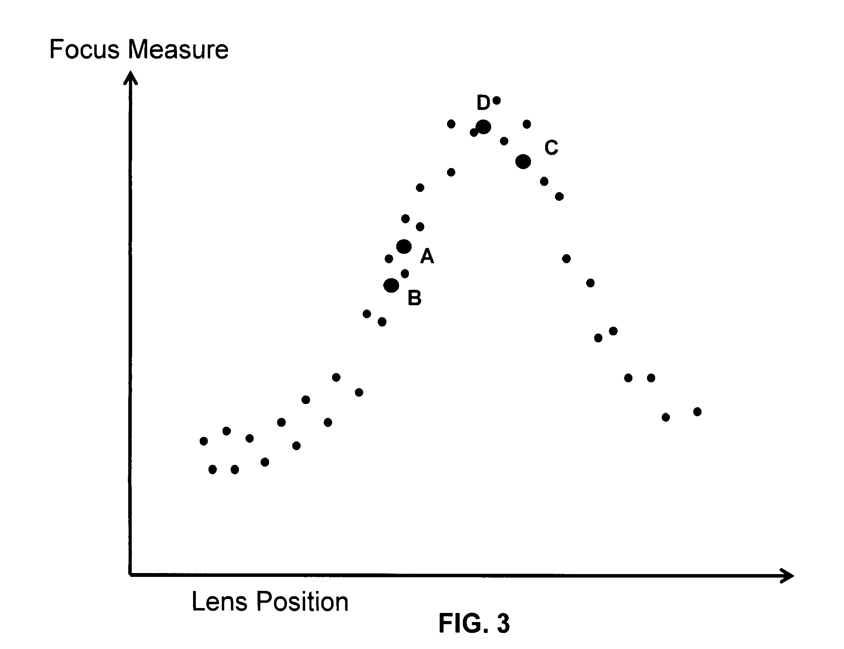

FIG. 3 is an example of a diagram illustrating a basic cycle of an AF algorithm, including the effects of image noise, according to an embodiment of the present disclosure. While FIG. 2 illustrated a smooth transition between points, FIG. 3 includes random image noise as shown by the smaller dots with reference points A, B, C, and D shown for comparison. In reality, an AF algorithm does not have the smooth and clear focus measure curve as shown in FIG. 2, but rather is confronted with noisy samples of focus measure estimates at certain points of time as the lens position is modified.

The measurements in FIG. 3 are noisy and randomly fluctuate due to inherent noise in the image, but also due to other factors such as random vibration of the camera, motion, changing illumination, ISO value settings, and the like. Thus, moving from the initial lens position A in any direction, either towards B or towards D, will result in some points with decreasing focus value. In such a situation, rather than being an indication that the point of sharpest focus has been reached, it is just an indication that a "local" maximum point has been found.

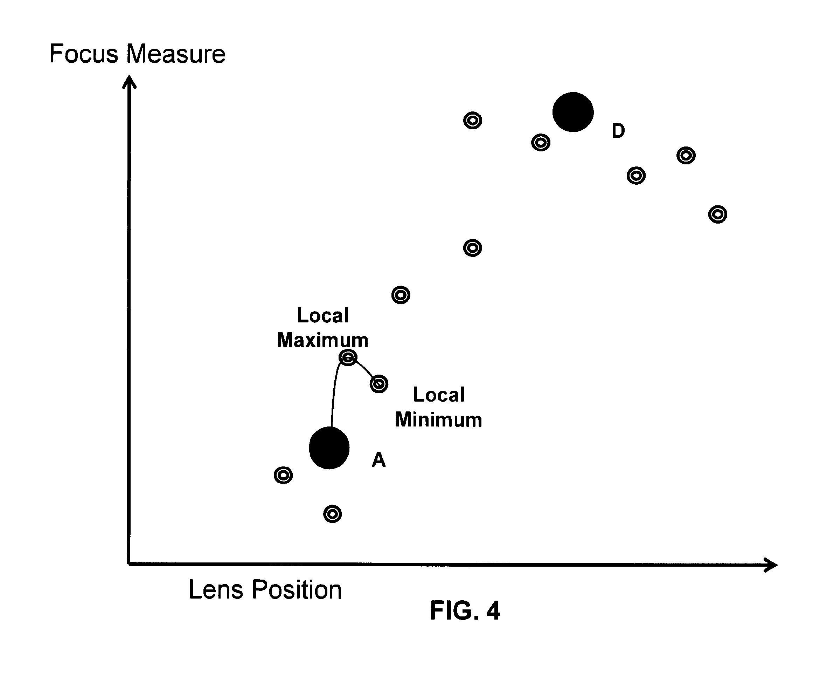

FIG. 4 illustrates such a situation where lens 112 in an AF system has an initial position shown by point A, a. Focus driver system 122 moves lens 116 towards point D in an attempt to located the sharpest focus point, *e.g*., where the focus measure is maximized. As lens 116 starts moving towards point D, the focus measure value increases and then decreases. In a noiseless environment, camera controller 120 would conclude that the maximum focus measure value was reached because the focus measure value started to decrease. However, due to image noise the "maximum" detected point is not the point of sharpest focus but rather just a local maximum, as shown in FIG. 4.

As lens 116 continues to move past the local maximum point, a local minimum point is reached after which focus measure values again increase and surpass the local maximum value. Such a situation shows that the true maximum focus measure has not yet been reached and that the suspected maximum focus measure value was simply a local maximum.

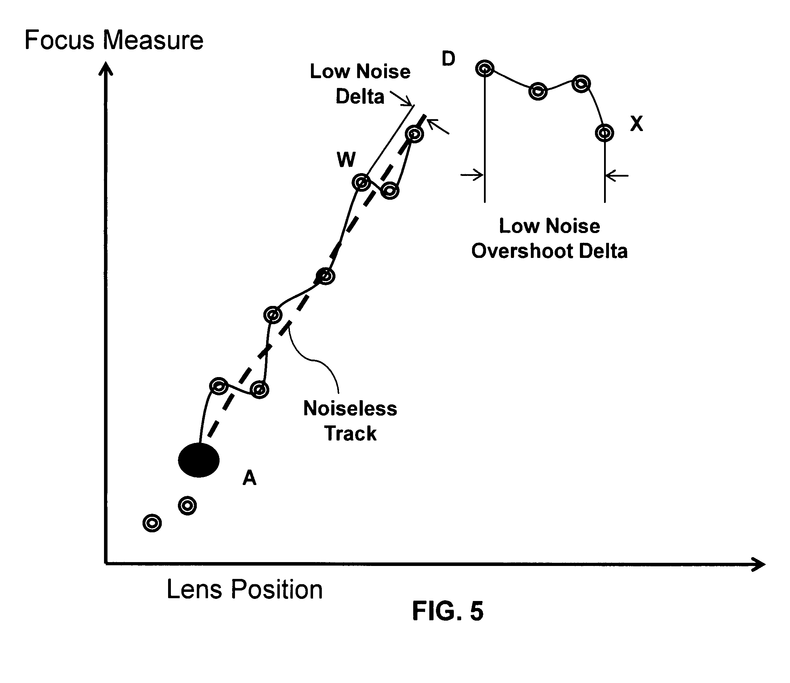

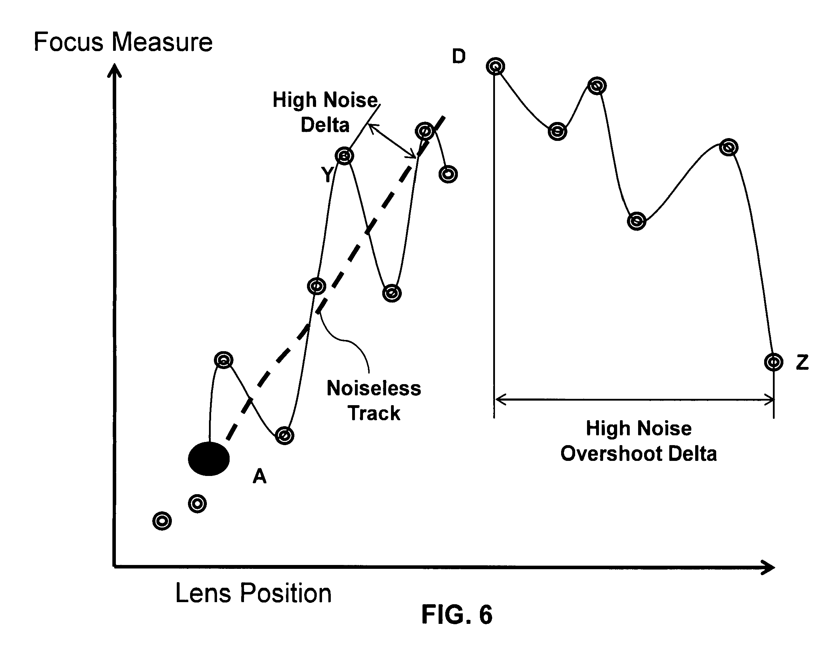

In order to avoid such false detections, a significant amount of focus measure must be detected prior to verifying that the true focus measure point has been detected and to reverse the travel direction of lens 112 to return to the actual sharpest focus point. The value of overshoot is a crucial trade-off within any AF algorithm. If the amount of overshoot is too small then local maximums will be falsely identified at the maximum focus measure point. If the value of overshoot is too large then excessive overshoots occur, wasting time and producing observable blurring images after passing the sharp focus position. Typical AF algorithms attempt to mitigate the issue of false identification and excessive overshoot by defining a midrange overshoot value that works in most situations, but is not optimum across the range of noise conditions. FIGs. 5 and 6 will discuss adaptive auto-focus with the full range of noise situations.

### Adaptive Auto-Focus In Low Noise

FIG. 5 is an example of a diagram illustrating a cycle of an adaptive AF algorithm showing a lens position given a focus measure in an auto-focus system with low noise information content, according to an embodiment of the present disclosure. As previously mentioned, image noise increases in low light, high ISO situations, while the noise information decreases in highly illuminated, low ISO environments. The adaptive auto-focus algorithm recognizes the relatively lower noise information contained in an image and then, as a consequence, decreases the threshold for a corresponding overshoot value. FIG. 5 again shows the initial starting position of lens 112 at point A. Also shown is the relationship between the focus measure and lens position in the absence of noise, labeled as the noiseless track. Camera controller 120, on a periodic or continual basis, determines the amount of noise information in the received image. The amount of noise information is diagramed as the offset between a particular point and the noiseless track. An example is shown for point W and labeled low noise delta.

In the situation with a low noise delta, camera controller 120 assigns an overshoot threshold based on the noise delta amount, *e.g*., low noise delta. In an embodiment, this threshold is set at a multiple of the noise measurement at a particular point in time, *e.g*., 3 x noise delta. As a result the amount of overshoot needed to verify that the true sharpest focus position is point D is shown as the overshoot delta between points D and X.

As the image noise levels are not necessarily constant, camera controller 120, in an embodiment, continuously monitors the amount of noise in a received image and can continuously modify the overshoot threshold. In another embodiment, camera controller 120, on a periodic basis, determines the amount of noise in a received focus measure and modifies the overshoot threshold. In any case, the overshoot threshold adapts to the noise levels in a received focus measure.

While moving lens 112, in an embodiment, the current focus measure is continuously monitored within AF system 100. An initial current focus measure value in stored within AF system 100 and referred to as the maximum focus measure. When the current focus measure exceeds the stored maximum focus measure, the stored maximum focus measure is replaced with the new maximum focus measure. The lens motion continues until the focus measure starts to decrease. Since a decrease of the focus measure can be caused by random noise fluctuations, the lens motion continues in the same direction until statistically significant decrease of the focus measure is observed. At this point two different situations are possible.

The first situation occurs where during the lens motion the focus measure was decreasing all the time, with no statistically significant maximum being reached and passed during the lens motion. In this scenario the lens movement direction is reversed, and the process is repeated. Given the reversed direction, the maximum focus will be reached with a subsequent decrease in the focus measure.

The second situation occurs where during the lens motion the focus measure was initially increasing, a statistically significant maximum was reached and then the focus measure started to decrease. In this scenario the position of the maximum focus is determined, and the lens is moved back to the position of maximum focus.

In the conventional prior art, AF algorithms determine the overshoot threshold by a pre-defined or heuristically defined constant. In the present disclosure the required overshoot is determined as a statistically significant maximum of the noise of the focus measure. This approach gives the advantage of minimizing overshoot. A user typically believes that an AF system is preforming unnecessary, or excessive, auto-focus sweeps when the perceived image blurs significantly. In an embodiment of the present disclosure, the lens is moved just to the point where the blur due to defocus is comparable to the blur due to the noise, and therefore no perceptually excessive blur will be observed. However, in the situations of significant image noise, the threshold will be correspondingly increased and the robust and reliable AF operation will be preserved.

The same approach applies in the situation where, from the initial lens starting position A, focus driver system 122 selects a direction of travel for lens 112 in the opposite direction of focus point D. In this situation camera controller 120 will determine the noise content of image 120 and select an overshoot threshold based on a multiple of the noise measurement. When the threshold is exceeded, focus system 113 will reverse the direction of travel of lens 112.

### Adaptive Auto-Focus In High Noise

FIG. 6 is an example of a diagram illustrating a cycle of an adaptive AF algorithm showing a lens position given a focus measure in an auto-focus system with high noise information content, according to an embodiment of the present disclosure. The adaptive auto-focus algorithm recognizes the relatively higher noise information contained in an image and then, as a consequence, increases the threshold for a corresponding overshoot value in order to assure an accurate maximum focus measurement determination. While adaptive auto-focus in low noise allows for a faster, more efficient sharpest focus position determination, adaptive auto-focus in a high noise environment allows for an accurate maximum focus measure determination where typical AF algorithms fail to determine any type of maximum focus measurement position.

FIG. 6 again shows the initial starting position of lens 112 at point A. Also shown is the relationship between the focus measure and lens position in the absence of noise, labeled as the noiseless track. Camera controller 120, on a periodic or continual basis, determines the amount of noise information in the received image. The amount of noise information is diagramed as the offset between a particular point and the noiseless track. An example is shown for point Y and labeled high noise delta. Note that the high noise delta is greater than the low noise delta illustrated in FIG. 5.

In the situation with a high noise delta, camera controller 120 assigns an overshoot threshold based on the noise delta amount, *e.g*. the high noise delta. In an embodiment, this threshold is set at a multiple of the noise measurement at any particular point in time, *e.g*., 3 x noise delta. As a result the amount of overshoot needed to verify that the true sharpest focus position is point D is shown as the overshoot delta between points D and Z. Again, note that the high noise overshoot delta is greater than the low noise overshoot illustrated in FIG. 5.
As previously mentioned, the image noise levels are not necessarily constant, and camera controller 120 can continuously or periodically monitor the amount of noise in a received image and modify the associated overshoot threshold.

Once the threshold level has been obtained, camera controller 120 instructs focus system 113 to return lens 112 to the maximum focus measure position, indicated by point D in FIG. 6. As the amount of noise level is known at a particular point, and in this example has been determined to be relatively large, it becomes necessary for fair amount of overshoot travel to verify that point D was indeed the maximum focus measure position. Thus, the sharpest focus position D can actually be determined whereas a typical AF algorithm using a "standard" or nominal overshoot threshold value that was not based on the current noise information content of the image might not be able to determine any type of in-focus position.

The same approach applies in the situation where, from the initial lens starting position A, focus driver system 122 selects a direction of travel for lens 112 in the opposite direction of focus point D. In this situation camera controller 120 will determine the noise content of image 120 and select an overshoot threshold based on a multiple of the noise measurement. When the threshold is exceeded the focus system 113 will reverse the direction of travel of lens 112.

### Exemplary Methods of an Adaptive Auto-Focus Algorithm

Methods in accordance with embodiments will be described with respect to the adaptive auto-focus algorithm described in FIGS. 2-6 and in the system described in FIG. 1, without limitation.

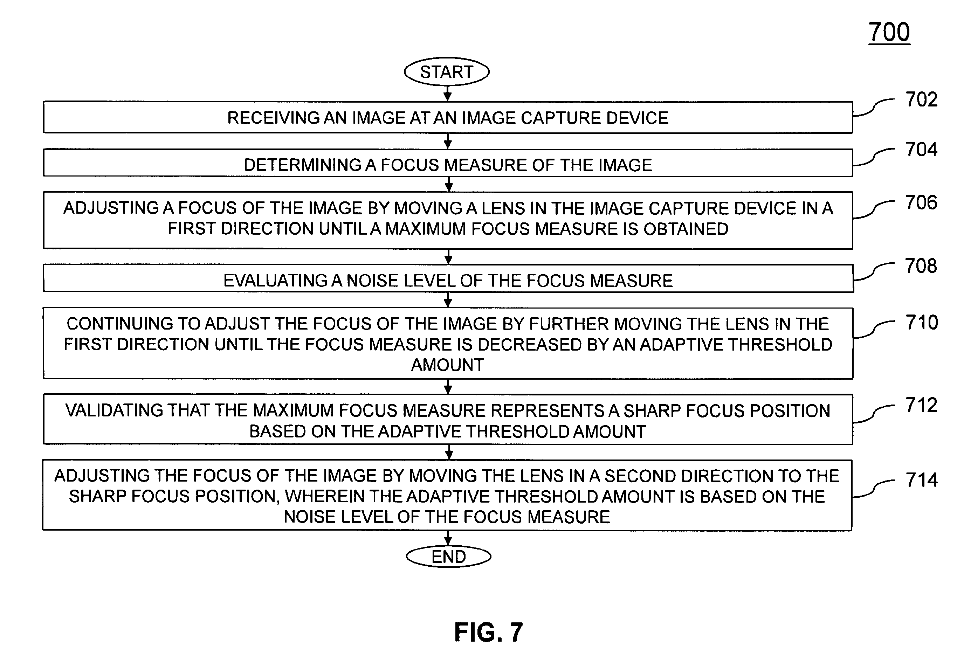

FIG. 7 is a flowchart of an exemplary method 700 for an adaptive auto-focus algorithm based on the noise level of a focus measure, according to an embodiment of the present disclosure. For ease of explanation, method 700 is described with respect to the adaptive auto-focus system of FIG. 1 using the methodology of FIGS. 2-6, but embodiments of the method are not limited thereto.

Method 700 begins at step 702 with the receiving of an image at an image capture device. In an embodiment, auto-focus system 100 includes an image capture device 110 that is capable of receiving and capturing an image of subject 120.

Method 700 continues in step 704 by determining a focus measure of the image. In an embodiment, image capture device 110 receives the image of subject 120 at image sensor 114. Camera controller 120 determined a focus measure of image sensor 114.

Method 700 continues in step 706 by adjusting a focus of the image by moving a lens in the image capture device in a first direction until a maximum focus measure is obtained. In an embodiment, focus driver system 122 arbitrarily chooses the direction 113 in which to start moving lens 112. In the scenario where the choice is in the "correct" direction, lens 112 starts moving from point A towards point D, as shown in FIG. 2, which is the maximum focus measure.

Method 700 continues at step 708 by evaluating a noise level of the focus measure. In an embodiment, camera controller 120, on a periodic or continual basis, determines the amount of noise information in the received image. The amount of noise information is diagramed as the offset between a particular point and the noiseless track. An example is shown in FIG. 5 for point W and labeled low noise delta.

Method 700 continues at step 710 by continuing to adjust the focus of the image by further moving the lens in the first direction until the focus measure is decreasing by an adaptive threshold amount. In an embodiment, in order to ascertain if point D is the maximum focus measure, camera controller 120 instructs focus driver system 122 to continue moving lens 112 in the same direction until camera controller 120 determines that the focus measure of image 120 on image sensor 114 is decreasing. Once camera controller 120 makes such a determination it instructs focus driver system 122 to move lens 112 in the opposite direction, back to point D.

Method 700 continues at step 712 by validating that the maximum focus measure represents a sharp focus position based on the adaptive threshold amount. In an embodiment, in a situation with a relatively low noise delta as shown in FIG. 5, camera controller 120 assigns an overshoot threshold based on the noise delta amount, *e.g*., low noise delta. In an embodiment, this threshold is set at a multiple of the noise measurement at any particular point in time, *e.g*., 3 x noise delta. As a result the amount of overshoot needed to verify that the true sharpest focus position is point D is shown as the overshoot delta between points D and X.

Method 700 continues at step 714 by adjusting the focus of the image by moving the lens in a second direction to the sharp focus position, wherein the adaptive threshold amount is based on the noise level of the focus measure. In an embodiment, once the threshold level has been obtained, camera controller 120 instructs focus system 113 to return lens 112 to the maximum focus measure position, indicated by point D in FIGs. 5 and 6. The method 700 then ends.

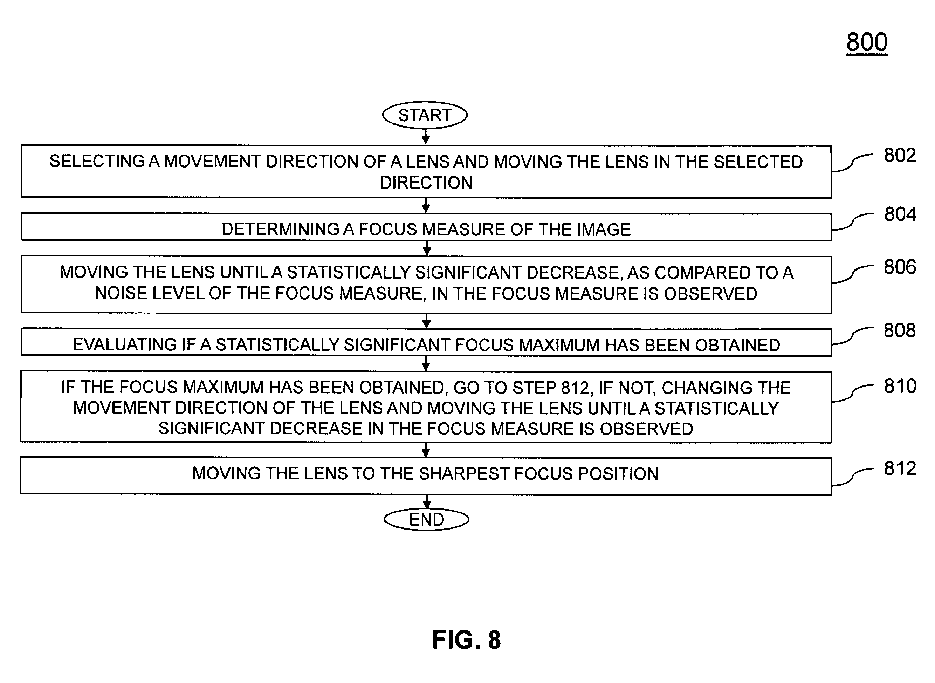

FIG. 8 is a flowchart of an exemplary method 800 for an adaptive auto-focus algorithm based on the noise level of a focus measure, according to an embodiment of the present disclosure. For ease of explanation, method 800 is described with respect to the adaptive auto-focus system of FIG. 1 using the methodology of FIGS. 2-6, but embodiments of the method are not limited thereto.

Method 800 begins at step 802 with the selecting a movement direction of a lens and moving the lens in the selected direction. In an embodiment, auto-focus system 100 includes an image capture device 110 that is capable of receiving and capturing an image of subject 120. In an embodiment, focus driver system 122 arbitrarily chooses the direction 113 in which to start moving lens 112, and starts to move lens 112 in that direction.

Method 800 continues in step 804 by determining a focus measure of the image. In an embodiment, image capture device 110 receives the image of subject 120 at image sensor 114. Camera controller 120 determined a focus measure of image 120 at image sensor 114.

Method 800 continues in step 806 by moving the lens until a statistically significant decrease, as compared to a noise level of the focus measure, in the focus measure is obtained. In an embodiment, focus driver system 122 moves the position of lens 112 in direction 113 while monitoring the focus measure by ISP 118. If the current focus measure value exceeds the previous focus measure, ISP 118 updates stored maximum focus measure with the new value. This continues until a statistically significant decrease of the focus measure is observed.

Method 800 continues at step 808 by evaluating if a statistically significant focus maximum has been obtained. In an embodiment, camera controller 120, on a periodic or continual basis, determines the amount of noise information in the received image. The amount of noise information is diagramed as the offset between a particular point and the noiseless track. An example is shown in FIG. 5 for point W and labeled low noise delta. In an embodiment, in order to ascertain if point D is the maximum focus measure, camera controller 120 instructs focus driver system 122 to continue moving lens 112 in the same direction until camera controller 120 determines that the focus measure of image 120 on image sensor 114 is decreasing.

Method 800 continues at step 810 by deciding if the maximum focus measure has been obtained. If the determination is made that the maximum focus measure has indeed been obtained, then method 800 proceeds directly to step 812, whereby the lens is moved to the sharpest focus position. If the maximum focus measure has not been obtained, step 810 changes the movement direction of the lens and moves the lens until a statistically significant decrease in the focus measure is observed. In an embodiment, once camera controller 120 makes such a determination that the focus maximum has not been obtained, it instructs focus driver system 122 to move lens 112 in the opposite direction, back towards point D.

Method 800 continues at step 812 by moving the lens to the sharpest focus position. In an embodiment, once the threshold level has been obtained, camera controller 120 instructs focus system 113 to return lens 112 to the maximum focus measure position, indicated by point D in FIGs. 5 and 6. The method 800 then ends.

Those skilled in the relevant art(s) will recognize that the method can additionally or alternatively include any of the functionality of the auto-focus system 100 as discussed above, and the above description of the exemplary method should neither be construed to limit the method nor the description of the adaptive auto-focus system.

### Example Processor System Implementation

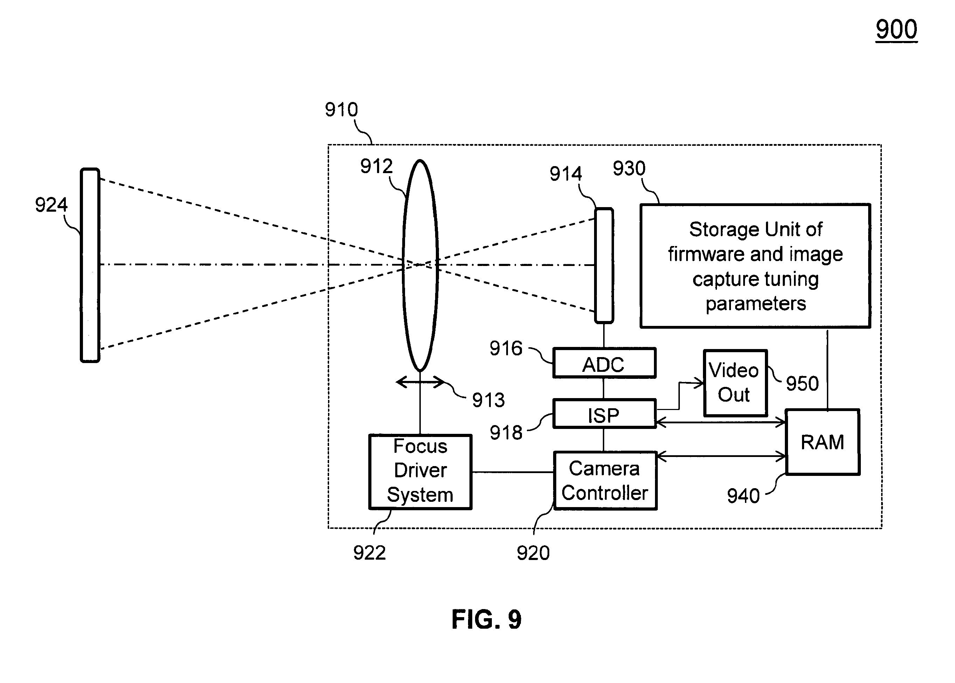

FIG. 9 illustrates a block diagram of an auto-focus (AF) system 100, according to an embodiment of the present disclosure. AF system 900 includes image capture device 910 capable of receiving and capturing an image of subject 920. Image capture device 910 includes a moveable lens 912 along optical axis 913, an image sensor 914, an analog to digital converter (ADC) 916, a digital image signal processor (ISP) 918, a camera controller 920, a focus driver system 922, a storage unit 930, ram 940 and a video out port 950.

In an embodiment, a signal from image sensor 914 is acquired and converted into a digital format by ADC 916. The digital format image is then processed by ISP 918 that processes the digital image and generates the output video of image capture device 910 at video out port 950. The video out signal can be either in digital or analog form, for either displaying on the camera screen, and/or storage, and/or transmitting via cable or wireless and/or further signal process and/or sing, compression and/or encoding etc.

ISP 918 also evaluates parameters, such as image intensity and contrast, for camera control and image tuning. ISP 918 evaluates these parameters by processing the image or video stream. In particular ISP 918 evaluates focus measure, which is transmitted to camera controller 920, which in turn controls the lens position via focus driver system 922.

### CONCLUSION

It is to be appreciated that the Detailed Description, and not the Abstract, is intended to be used to interpret the claims. The Abstract may set forth one or more, but not all exemplary embodiments and thus, is not intended to limit the appended claims in any way.

The embodiments have been described above with the aid of functional building blocks illustrating the implementation of specified functions and relationships thereof. The boundaries of these functional building blocks have been arbitrarily defined herein for the convenience of the description. Alternate boundaries may be defined so long as the specified functions and relationships thereof are appropriately performed.

It will be apparent to those skilled in the relevant art(s) that various changes in form and detail can be made therein without departing from the spirit and scope of the present disclosure. Thus the present disclosure should not be limited by any of the above-described exemplary embodiments, but should be defined only in accordance with the following claims and their equivalents.

## Claims

1. A system for auto-focusing, comprising:
an image capture device configured to receive an image;
a controller configured to determine a focus measure of the image and a noise level of the focus measure; and
a focus system configured to:
determine an adaptive threshold based on the noise level; and
adjust a focus of the image by moving a lens in the image capture device until a maximum focus measure position is reached, using the adaptive threshold level.

2. The system of claim 1, wherein the controller continuously determines the focus measure and the noise level of the focus measure.

3. The system of claim 1, wherein the focus system determines the adaptive threshold for the focus measure as a multiple of the noise level of the focus measure.

4. The system of claim 1, wherein the focus system verifies the maximum focus measure position by overshooting the maximum focus measure position by an adaptive threshold amount and then returning to the maximum focus measure position.

5. The system of claim 1, wherein the controller determines the focus measure based on intensity.

6. The system of claim 1, wherein the controller determines focus measure based on a summing of gradients of the image.

7. A system for auto-focusing, comprising:
an image capture device configured to receive an image;
a controller configured to determine a focus measure of the image and a noise level of the focus measure; and
a focus system configured to:
determine an adaptive threshold for the focus measure based on the noise level of the focus measure;
adjust a focus of the image by moving a lens in the image capture device in a first direction until the focus measure value decreases by a value equal to the adaptive threshold; and
move the lens in the image capture device in a second direction.

8. The system of claim 7, wherein the focus system moves the lens in the second direction until the focus measure reaches a maximum value and then decreases from the maximum value by the value equal to the adaptive threshold.

9. The system of claim 7, wherein the focus system moves the lens in the second direction until a maximum focus measure position is reached.

10. A method for auto-focusing, comprising:
receiving an image at an image capture device;
determining a focus measure of the image;
adjusting a focus of the image by moving a lens in the image capture device in a first direction;
evaluating a noise level of the focus measure;
continuing to adjust the focus of the image by further moving the lens in the first direction until the focus measure is decreased by an adaptive threshold amount; and
adjusting the focus of the image by moving the lens in a second direction to a maximum focus measure position,
wherein the adaptive threshold amount is based on the noise level of the focus measure.

11. The method of claim 10, wherein the evaluating a noise level of the focus measure is performed continuously.

12. The method of claim 10, wherein the evaluating a noise level of the focus measure is performed on a periodic basis.

13. The method of claim 10, wherein the adaptive threshold amount is continuously estimated.

14. The method of claim 10, wherein the adaptive threshold amount is a multiple of the noise level of the focus measure.

15. The method of claim 10, wherein an adaptive threshold is increased as a result of a decreasing illumination level of the image.
